# FASCICULE DE BREVET EUROPEEN

(11) **EP 2 378 453 B1**
(45) Date de publication et mention de la délivrance du brevet: **15.01.2014**
(21) Numéro de dépôt: 11151888.2
(22) Date de dépôt: 24.01.2011
(51) Int. Cl.: G06F 21/51, G06F 21/83, G07F 7/08

(54) **Terminal de paiement électronique portatif adapté à exécuter des programmes non-certifiés**
Tragbares elektronisches Kartenprüfgerät, das für die Ausführung von nicht zertifizierten Programmen adaptiert ist
Portable electronic payment terminal suitable for running non-certified programs

(30) Priorité: 25.01.2010 FR 1050465
(43) Date de publication de la demande: 19.10.2011
(73) Titulaire: Compagnie Industrielle et Financiere d'Ingenierie Ingenico, 92200 Neuilly sur Seine (FR)
(72) Inventeur: Carabelli, André, 07130 Saint Peray (FR)
(74) Mandataire: de Beaumont, Michel

(56) Documents cités:
- EP-A1- 1 394 728
- EP-A1- 1 808 834
- US-A1- 2006 138 241

## Description

### Domaine de l'invention

La présente invention concerne un terminal de paiement électronique portatif adapté à exécuter à la fois des programmes liés à des opérations de paiement et des programmes liés à des applications annexes, par exemple des programmes de navigation sur internet.

### Exposé de l'art antérieur

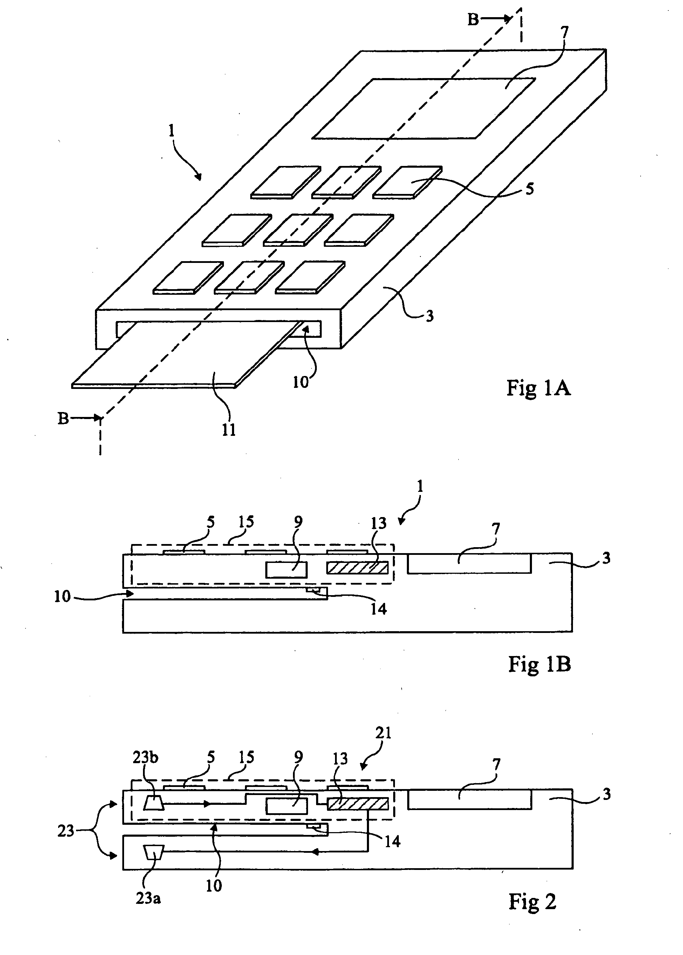

La figure 1A est une vue en perspective représentant de façon très simplifiée un terminal de paiement électronique portatif 1.

La figure 1B est une vue en coupe du terminal 1 de la figure 1A, selon le plan B-B représenté par des traits en pointillés sur la figure 1A.

Le terminal 1 comprend un boîtier 3, contenant notamment une carte de circuits électroniques (non représentée), à laquelle sont reliés divers composants périphériques, ici un clavier 5, un écran d'affichage 7, et un lecteur 9 de carte à puce (figure 1B). Le lecteur 9 est situé au fond d'une fente 10, ouverte uniquement en façade, dans laquelle un utilisateur peut insérer une carte à puce de paiement 11 (figure 1A). D'autres composants périphériques, non représentés, tels qu'une imprimante, un module de modulation/démodulation de données adapté à être relié à un réseau d'échanges de données, etc., sont généralement prévus.

Le terminal 1 comprend notamment un microprocesseur 13 (figure 1B), destiné à exécuter des programmes adaptés à piloter les composants périphériques du terminal, pour réaliser des opérations de paiement. A titre d'exemple, il est prévu un programme de saisie de code confidentiel (PIN). Lorsqu'une carte à puce est correctement insérée dans la fente 10 et authentifiée par le terminal, ce programme affiche, sur l'écran 7, des messages d'invite à la saisie du PIN. Un détecteur, par exemple un interrupteur mécanique 14, est généralement prévu au voisinage du fond de la fente pour valider l'introduction complète de la carte. Le code saisi par l'utilisateur transite par les circuits électroniques du terminal pour être vérifié par la puce de la carte de paiement. Le programme de saisie de PIN affiche, le cas échéant, un message de confirmation du succès de la saisie.

Il est prévu une zone 15 sécurisée, représentée par des traits en pointillés, dont l'accès physique est protégé par des dispositifs anti-intrusion. Les composants sensibles du terminal, par exemple les bornes de contact des touches du clavier 5, et les circuits électroniques par lesquels transite le code PIN saisi par l'utilisateur, sont placés dans la zone 15. Ces composants sont protégés contre toute tentative de manipulation frauduleuse. Des mécanismes peuvent être prévus pour mettre hors d'usage le terminal 1 lorsqu'une intrusion est détectée dans la zone 15.

Divers mécanismes de sécurité sont prévus pour garantir que seuls des programmes certifiés, ou sécurisés, puissent être exécutés, et communiquer avec les différents composants périphériques du terminal (clavier, écran, etc.). On entend par programme certifié, ou sécurisé, un programme audité et reconnu comme fiable, par exemple par un organisme de sécurité d'un groupement interbancaire tel que le PCI SSC (de l'anglais "Payment Card Industry Security Standards Council"). Dans la pratique, les programmes certifiés disposent d'une signature numérique. Tout programme ne disposant pas d'une signature authentique se voit refuser l'accès au microprocesseur et aux composants périphériques du terminal.

Le document US-2006/0138241-A1 divulgue un mécanisme de détection d'une carte à puce dans un lecteur de carte à puce basé sur la détection de la bande magnétique, des capteurs d'ouverture et de fermeture du masque de la fente du lecteur de carte à puce ainsi que sur des capteurs optiques permettant la détection de la carte à puce.

Le document EP-1808834-A1 divulgue un mécanisme de détection de carte garantissant qu'aucun corps étranger n'est introduit avec une carte à puce dans le lecteur. Ce mécanisme utilise différents capteurs dans le lecteur et au niveau de la fente permettant l'introduction de la carte à puce.

Il serait souhaitable de pouvoir utiliser les terminaux de paiement électronique portatifs pour d'autres applications que des applications de paiement, par exemple des applications de navigation sur internet, d'affichage publicitaire et/ou multimédia, de géo-localisation de type GPS, de téléphonie, etc. Toutefois, ceci implique l'ouverture du terminal et de certains composants périphériques tels que l'écran et le clavier numérique, à des programmes non-certifiés par des organismes de sécurité bancaire. Ceci pose des problèmes évidents de sécurité. A titre d'exemple, un attaquant pourrait aisément prévoir un programme frauduleux visant à recueillir des informations confidentielles et les communiquer via internet. Un tel programme pourrait par exemple imiter les messages authentiques d'invite à la saisie du PIN, pour tromper l'utilisateur et l'inciter à saisir son code, qui pourra alors être récupéré et utilisé de façon frauduleuse.

### Résumé

Ainsi, un objet d'un mode de réalisation de la présente invention est de proposer un terminal de paiement palliant, au moins en partie, les inconvénients des terminaux de paiement actuels.

Un objet d'un mode de réalisation de la présente invention est de proposer un terminal de paiement adapté à exécuter des programmes non-certifiés par des organismes de sécurité bancaire.

Un objet d'un mode de réalisation de la présente invention est de proposer un tel terminal présentant une sécurité optimale pour l'utilisateur.

Ainsi, un mode de réalisation de la présente invention prévoit un terminal de paiement électronique portatif, comprenant : une fente destinée à recevoir une carte à puce ; au voisinage de l'entrée de la fente, un détecteur d'absence d'une carte ; et au voisinage du fond de la fente, un détecteur (14) d'engagement complet d'une carte dans la fente.

Selon un mode de réalisation de la présente invention, le terminal est adapté à commuter d'un premier mode de fonctionnement à un second mode de fonctionnement, lorsque le détecteur signale la présence d'une carte dans la fente.

Selon un mode de réalisation de la présente invention, le détecteur comprend : du côté d'une première paroi de la fente, un émetteur de signaux non-déterministes ; du côté d'une seconde paroi de la fente, en regard de l'émetteur, un récepteur de signaux ; et un élément adapté à déterminer si les signaux reçus correspondent aux signaux émis.

Selon un mode de réalisation de la présente invention, le récepteur et l'élément sont situés dans une zone sécurisée.

Selon un mode de réalisation de la présente invention, l'émetteur comprend une diode électroluminescente reliée à un générateur de signaux non-déterministes.

Selon un mode de réalisation de la présente invention, le récepteur comprend un phototransistor.

Selon un mode de réalisation de la présente invention, l'élément comprend un comparateur comprenant des première et seconde bornes d'entrée reliées respectivement à une borne d'entrée de l'émetteur et à une borne de sortie du récepteur.

Selon un mode de réalisation de la présente invention, l'élément comprend un microprocesseur comprenant des première et seconde bornes d'entrée reliées respectivement à une borne d'entrée de l'émetteur et à une borne de sortie du récepteur.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1A, précédemment décrite, est une vue en perspective très schématique d'un terminal de paiement électronique portatif usuel ;
la figure 1B, précédemment décrite, est une vue en coupe du terminal de la figure 1A selon l'axe B-B ;
la figure 2 est une vue en coupe dans le même plan que la figure 1B, d'un mode de réalisation d'un terminal de paiement adapté à être ouvert à des programmes non-certifiés ; et
la figure 3 représente le schéma électrique d'un mode de réalisation d'un détecteur de présence ou d'absence d'une carte de paiement dans la fente d'un terminal de paiement.

### Description détaillée

Par souci de clarté, de mêmes éléments ont été désignés par de mêmes références aux différentes figures et, de plus, comme cela est habituel dans la représentation des systèmes électroniques, les diverses figures ne sont pas tracées à l'échelle.

On propose un terminal de paiement électronique portatif adapté à fonctionner selon un premier mode, dit non-sécurisé, lorsqu'aucune carte n'est présente dans la fente du lecteur de carte à puce, et selon un second mode, dit sécurisé, lorsqu'une carte est présente dans la fente du lecteur de carte à puce.

Dans le mode de fonctionnement sécurisé, seuls des programmes reconnus comme fiables, par exemple des programmes certifiés par des organismes de sécurité bancaire, peuvent être exécutés et accéder aux divers composants périphériques (clavier, écran, etc.) du terminal. Des mécanismes de sécurité, par exemple mécanismes de signature numérique, garantissent qu'aucun programme non-certifié ne puisse être exécuté lorsque le terminal est en mode sécurisé.

Dans le mode de fonctionnement non-sécurisé, des programmes non-certifiés peuvent être exécutés librement et avoir accès à certains composants périphériques tels que le clavier et l'écran. Bien qu'il soit alors possible pour un attaquant de prévoir un programme frauduleux, visant par exemple à tromper l'utilisateur par une imitation frauduleuse des messages authentiques d'invite à la saisie du PIN, le risque que l'utilisateur se laisse piéger est extrêmement faible. En effet, aucune carte de paiement n'étant insérée dans la fente du lecteur de carte à puce, il est très improbable que l'utilisateur accepte de répondre à une telle demande de saisie de PIN.

Comme cela sera expliqué plus en détail ci-après, on propose ici un terminal adapté à détecter la présence ou l'absence d'une carte dans la fente du lecteur de carte à puce, et à commuter du mode non-sécurisé vers le mode sécurisé lorsqu'une carte est détectée dans la fente, c'est-à-dire que le détecteur nie l'absence d'une carte dans la fente.

Par défaut, en l'absence de carte dans la fente, le terminal fonctionne en mode non-sécurisé et autorise l'exécution de tous types de programmes.

Lorsqu'une carte est insérée dans la fente du lecteur de carte à puce, le terminal commute du mode non-sécurisé vers le mode sécurisé. L'accès des programmes non-certifiés aux divers composants du terminal est alors bloqué.

Lorsque la carte de l'utilisateur est retirée du terminal, par exemple après une opération de paiement, un programme certifié, dédié à cette tâche, met en oeuvre la commutation de retour vers le mode non-sécurisé.

La figure 2 est une vue en coupe dans le même plan que la figure 1B, d'un mode de réalisation d'un terminal de paiement 21 adapté à détecter la présence ou l'absence d'une carte dans la fente du lecteur de carte à puce.

Comme le terminal 1 de la figure 1B, le terminal 21 comprend un boîtier 3, contenant notamment une carte de circuits électroniques (non représentée), à laquelle sont reliés divers composants périphériques, ici un clavier 5, un écran d'affichage 7, et un lecteur 9 de carte à puce. Des contacts d'entrée-sortie du lecteur 9 sont situés au voisinage du fond d'une fente 10, ouverte uniquement en façade, dans laquelle un utilisateur peut insérer une carte à puce. D'autres composants périphériques, non représentés, tels qu'une imprimante, un module de modulation/démodulation de données, etc., peuvent être prévus. Le terminal 21 comprend en outre un microprocesseur 13 destiné à exécuter des programmes, et un détecteur 14 d'introduction complète d'une carte de paiement dans la fente 10. Les composants sensibles du terminal 21, tels que le microprocesseur 13, les bornes de contact des touches du clavier 5, le lecteur 9, etc., sont placés dans une zone 15 dont l'accès physique est protégé par des dispositifs anti-intrusion.

Vers l'ouverture de la fente 10 du terminal, on prévoit un détecteur 23 d'absence de carte dans la fente 10. Le résultat de la détection effectuée par le détecteur 23 est fourni à un mécanisme adapté à commuter du mode non sécurisé vers le mode sécurisé lorsqu'une carte est détectée (c'est-à-dire que l'absence d'une carte est niée) dans la fente 10.

Selon un avantage du mode de réalisation proposé, la position du détecteur 23, vers l'ouverture de la fente 10 du lecteur de carte à puce, permet de garantir que la commutation vers le mode sécurisé s'effectue dès l'amorce de l'introduction d'une carte de paiement dans la fente 10. Ceci permet notamment d'éviter qu'un utilisateur qui aurait inconsciemment mal inséré sa carte dans le lecteur, puisse être piégé par un programme frauduleux, par exemple un programme imitant un message authentique d'invite à la saisie du PIN en vue de récupérer le PIN de l'utilisateur.

A titre d'exemple, le détecteur 23 est positionné à une distance comprise entre 4 mm et 1 cm de l'ouverture de la fente 10, de façon à garantir la commutation vers le mode sécurisé dès l'amorce de l'introduction d'une carte de paiement dans la fente 10. On positionnera de préférence le détecteur 23 de façon que la commutation ait lieu avant que la puce de la carte de paiement ne soit intégralement rentrée à l'intérieur de la fente.

Selon un mode de réalisation préféré, le détecteur 23 comporte un émetteur de signaux lumineux comprenant une diode électroluminescente 23a, située du côté de la paroi inférieure de la fente 10, et, en regard de la diode 23a, un récepteur de signaux lumineux comprenant un phototransistor 23b, situé du côté de la paroi supérieure de la fente 10. La diode 23a est reliée, par exemple via le microprocesseur 13, à un générateur de signaux non-déterministes, par exemple un générateur de signaux aléatoires ou pseudo-aléatoires. Le signal électrique de sortie du phototransistor 23b est comparé au signal d'entrée de la diode 23a. Si le signal de sortie de phototransistor 23b diffère du signal d'entrée de la diode 23a, le détecteur 23 informe le terminal que l'absence d'une carte dans la fente 10 n'est plus garantie. En effet, lorsqu'une carte est insérée à l'entrée de la fente, cette dernière masque le signal lumineux émis par la diode 23a, qui n'est alors plus reproduit par le phototransistor 23b.

Pour prévenir tout risque de manipulation frauduleuse du détecteur 23, visant à simuler une absence de carte alors qu'une carte est présente dans la fente, le phototransistor 23b et la liaison entre le phototransistor 23b et le dispositif de comparaison (via le microprocesseur 13), sont placés dans la zone 15 sécurisée. Ceci permet par exemple d'éviter qu'un attaquant ne puisse former un court-circuit entre l'entrée de la diode 23a et la sortie du phototransistor 23b, en vue de piéger le détecteur 23. Pour éviter que le signal émis par la diode 23a ne soit reproduit et retransmis vers le phototransistor 23b, via un système de réception/émission frauduleux, une analyse des temps de propagation des signaux peut être prévue.

A titre de variante, les positions respectives de la diode 23a et du phototransistor 23b sont inversées. On veillera alors à ce que la liaison entre le générateur et la diode 23a soit dans la zone sécurisée 15.

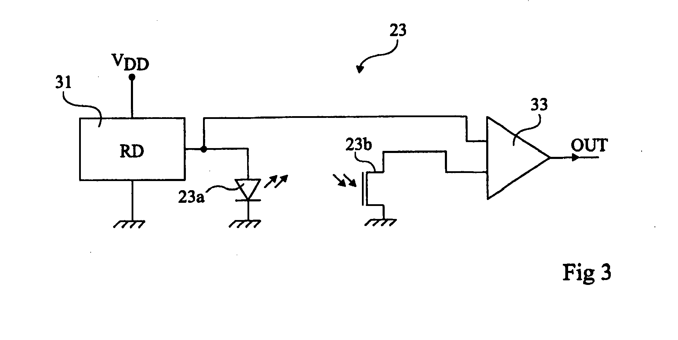

La figure 3 représente le schéma électrique d'un mode de réalisation du détecteur 23 de présence ou d'absence de carte du terminal de paiement 21 de la figure 2.

Le détecteur 23 comprend une diode électroluminescente 23a, disposée en regard d'un phototransistor 23b. Un générateur de signaux non-déterministes 31 est connecté entre une borne d'alimentation haute V_{DD} et une borne d'alimentation basse, ici la masse. La sortie du générateur 31 est reliée à l'électrode d'anode de la diode 23a. L'électrode de cathode de la diode 23b est reliée à la masse. Le détecteur 23 comprend en outre un comparateur 33, connecté entre une borne d'alimentation haute V_{DD} et une borne d'alimentation basse, ici la masse. Des première et seconde bornes de conduction du phototransistor 23b sont respectivement reliées à une première borne d'entrée du comparateur 31 et à la masse. La sortie du générateur 31 est en outre reliée à une seconde borne d'entrée du comparateur 33.

En l'absence d'un objet opaque entre la diode 23a et le phototransistor 23b, le signal de sortie du phototransistor 23b coïncide avec le signal d'entrée de la diode 23a. La sortie OUT du comparateur 33 est alors dans un premier état.

En présence d'un objet opaque entre la diode 23a et le phototransistor 23b, le signal de sortie du phototransistor 23b ne coïncide plus avec le signal d'entrée de la diode 23a. La sortie OUT du comparateur 33 est alors dans un second état.

La sortie OUT du comparateur 33 indique donc la présence ou l'absence d'un objet opaque entre la diode 23a et le phototransistor 23b.

On notera que le comparateur 33 pourra ne pas être un composant matériel indépendant, la fonction de comparaison pouvant être mise en oeuvre par le microprocesseur 13 de la figure 2.

Un avantage du mode de réalisation des figures 2 et 3 est que le détecteur 23 offre une grande sécurité. En effet, en raison du caractère non-déterministe des signaux émis par la diode 23a, il est difficile, voire impossible à un attaquant simuler de façon frauduleuse une absence de carte alors qu'une carte est présente dans la fente.

Le terminal proposé est donc adapté à exécuter des programmes non-certifiés par des organismes de sécurité bancaire, et garantit cependant une sécurité optimale à l'utilisateur.

On notera que le détecteur de changement de mode 23 ne remplace pas le détecteur usuel 14 d'engagement complet de la carte dans la fente 10, mais vient en complément de celui-ci.

On notera en outre que le détecteur 23 proposé ci-dessus ne signale une absence de carte que si tous ses composants sont intègres et fonctionnels, ce qui renforce d'autant plus la sécurité du dispositif.

Des modes de réalisation particuliers de la présente invention ont été décrits. Diverses variantes et modifications apparaîtront à l'homme de l'art.

En particulier, l'invention ne se restreint pas à l'utilisation du détecteur d'absence de carte décrit en relation avec la figure 3. L'homme de l'art saura mettre en oeuvre le fonctionnement recherché quel que soit le moyen utilisé pour détecter l'absence d'une carte dans la fente du lecteur. A titre d'exemple, on pourra prévoir un détecteur similaire au détecteur optique décrit ci-dessus, mais dans lequel l'émetteur et le récepteur fonctionnent à des longueurs d'onde non visibles. On pourra également prévoir un détecteur mécanique, toutefois, un tel détecteur sera plus difficile à sécuriser.

## Revendications

1. Terminal (21) de paiement électronique portatif comprenant :
une fente (10) destinée à recevoir une carte à puce (11) ;
au voisinage de l'entrée de la fente, un détecteur (23) d'absence d'une carte ; et
au voisinage du fond de la fente, un détecteur (14) d'engagement complet d'une carte dans la fente,
**caractérisé en ce que**:
ce terminal est adapté, lorsque le détecteur (23) signale la présence d'une carte dans la fente, à commuter d'un mode de fonctionnement non-sécurisé, dans lequel des programmes non-certifiés peuvent être exécutés, à un mode de fonctionnement sécurisé, dans lequel des mécanismes de sécurité garantissent qu'aucun programme non-certifié ne puisse être exécuté.

2. Terminal selon la revendication 1, dans lequel le détecteur d'absence (23) comprend :
du côté d'une première paroi de la fente (10), un émetteur (23a) de signaux non-déterministes ;
du côté d'une seconde paroi de la fente, en regard de l'émetteur, un récepteur (23b) de signaux ; et
un élément (33) adapté à déterminer si les signaux reçus correspondent aux signaux émis.

3. Terminal selon la revendication 2, dans lequel le récepteur (23b) et ledit élément (33) sont situés dans une zone (15) sécurisée.

4. Terminal selon la revendication 2 ou 3, dans lequel l'émetteur comprend une diode électroluminescente (23a) reliée à un générateur (31) de signaux non-déterministes.

5. Terminal selon l'une quelconque des revendications 2 à 4, dans lequel le récepteur comprend un phototransistor (23b).

6. Terminal selon l'une quelconque des revendications 2 à 5, dans lequel ledit élément comprend un comparateur (33) comprenant des première et seconde bornes d'entrée reliées respectivement à une borne d'entrée de l'émetteur (23a) et à une borne de sortie du récepteur (23b).

7. Terminal selon l'une quelconque des revendications 2 à 5, dans lequel ledit élément comprend un microprocesseur (13) comprenant des première et seconde bornes d'entrée reliées respectivement à une borne d'entrée de l'émetteur (23a) et à une borne de sortie du récepteur (23b).

## Patentansprüche

1. Ein handgehaltenes elektronisches Zahlungsendgerät (21), das Folgendes aufweist:
einen Schlitz (10), der vorgesehen ist eine Chipkarte (11) aufzunehmen;
einen Detektor (23), in der Nähe der Schlitzöffnung, für die Abwesenheit der Karte; und
einen Detektor (14), in der Nähe des hinteren Endes des Schlitzes, für den vollständigen Eingriff einer Karte in dem Schlitz,
**dadurch gekennzeichnet, dass**:
das Endgerät geeignet ist, wenn der Detektor (23) die Anwesenheit einer Karte in dem Schlitz signalisiert, von einem nicht sicheren Betriebsmodus, in dem nicht zertifizierte Programme ausgeführt werden können, in einen sicheren Betriebsmodus zu wechseln, in dem Sicherheitsmechanismen garantieren, dass keine nicht zertifizierten Programme ausgeführt werden können.

2. Das Endgerät nach Anspruch 1, wobei der Abwesenheitsdetektor (23) Folgendes aufweist:
auf der Seite einer ersten Wand des Schlitzes (10), einen Sender (23a) von nicht deterministischen Signalen;
auf der Seite einer zweiten Wand des Schlitzes, gegenüber dem Emitter, einen Signalempfänger (23b); und
ein Element (33), das geeignet ist zu bestimmen, ob das empfangene Signal dem ausgesendeten Signal entspricht.

3. Das Endgerät nach Anspruch 2, wobei der Empfänger (23b) und das Element (33) in einem sicheren Bereich (15) angeordnet sind.

4. Das Endgerät nach Anspruch 2 oder 3, wobei der Sender eine Licht aussendende Diode (23a) aufweist, die mit einem Generator (31) von nicht deterministischen Signalen verbunden ist.

5. Das Endgerät nach einem der Ansprüche 2 bis 4, wobei der Empfänger einen Phototransistor (23b) aufweist.

6. Das Endgerät nach einem der Ansprüche 2 bis 5, wobei das Element einen Vergleicher (33) aufweist mit ersten und zweiten Eingangsanschlüssen, die jeweils entsprechend mit einem Eingangsanschluss des Senders (23a) und mit einem Ausgangsanschluss des Empfängers (23b) verbunden sind.

7. Das Endgerät nach einem der Ansprüche 2 bis 5, wobei das Element einen Mikroprozessor (13) aufweist mit ersten und zweiten Eingangsanschlüssen, die jeweils entsprechend mit einem Eingangsanschluss des Senders (23a) und mit einem Ausgangsanschluss des Empfängers (23b) verbunden sind.

## Claims

1. A hand-held electronic payment terminal (21) comprising:
a slot (10) intended to receive an I.C. chip card (11);
close to the slot opening, a detector (23) of the absence of a card; and
close to the back end of the slot, a detector (14) of the full engagement of a card into the slot,
**characterized in that**:
this terminal is adapted, when the detector (23) signals the presence of a card in the slot, to switching from a non-secure operating mode, where non-certified programs can be executed, to a secure operating mode, where security mechanisms guarantee that no non-certified program can be executed.

2. The terminal of claim 1, wherein the absence detector (23) comprises:
on the side of a first wall of the slot (10), an emitter (23a) of non-deterministic signals;
on the side of a second wall of the slot, opposite to the emitter, a signal receiver (23b); and
an element (33) capable of determining whether the received signals correspond to the emitted signals.

3. The terminal of claim 2, wherein the receiver (23b) and said element (33) are located in a secure area (15).

4. The terminal of claim 2 or 3, wherein the emitter comprises a light-emitting diode (23a) connected to a generator (31) of non-deterministic signals.

5. The terminal of any of claims 2 to 4, wherein the receiver comprises a phototransistor (23b).

6. The terminal of any of claims 2 to 5, wherein said element comprises a comparator (33) comprising first and second input terminals respectively connected to an input terminal of the emitter (23a) and to an output terminal of the receiver (23b).

7. The terminal of any of claims 2 to 5, wherein said element comprises a microprocessor (13) comprising first and second input terminals respectively connected to an input terminal of the emitter (23a) and to an output terminal of the receiver (23b).
